# EUROPÄISCHE PATENTSCHRIFT

(11) **EP 0 644 838 B1**
(45) Veröffentlichungstag und Bekanntmachung des Hinweises auf die Patenterteilung: **10.04.1996**
(21) Anmeldenummer: 93912597.7
(22) Anmeldetag: 16.06.1993
(51) Int. Cl.: B60V 1/11

(54) **LUFTKISSENFAHRZEUG**
HOVERCRAFT
VEHICULE A COUSSIN D'AIR

(30) Priorität: 17.06.1992 DE 4219828
(43) Veröffentlichungstag der Anmeldung: 29.03.1995
(73) Patentinhaber: ABS AIRCRAFT AG, CH-9403 Goldach (CH)
(72) Erfinder: BLUM, Albert, CH-2072 St. Blaise (CH); STIEGLER, Hartmut, D-4050 Mönchengladbach 1 (DE)
(74) Vertreter: Lippert, Hans-Joachim, Dipl.-Ing.
(86) Internationale Anmeldenummer: DE9300526
(87) Internationale Veröffentlichungsnummer: WO9325420

(56) Entgegenhaltungen:
- FR-A- 2 445 786
- US-A- 4 249 628

## Beschreibung

Die Erfindung betrifft ein Luftkissenfahrzeug mit zwei seitlich im Heckbereich vorgesehenen Triebwerken zur Erzeugung des Vortriebes, einem Kompressor zur Erzeugung eines unterhalb des Luftkissenfahrzeuges erzeugbaren Luftkissens, einer im Luftstrom der Triebwerke angeordneten Leitwerksanordnung mit zugehörender Trimmung, wobei eine zusätzliche Kraftkomponente durch eine Zusatzablenkung der Luftstrahlen beider Triebwerke erzeugt wird. Ein derartiges Luftkissenfahrzeug ist aus der US-A-4 249 628 bekannt.

Luftkissenfahrzeuge sind üblicherweise mit einem Kompressor zur Erzeugung des benötigten Luftkissens innerhalb einer Gummischürze und mit wenigstens einem Triebwerk für die Geradeaus- und/oder Kurvenfahrt versehen. Die Steuerung der Kurvenfahrt erfolgt in der Regel durch seitliche Ablenkung des Luftstrahles, beispielsweise mit einem aus dem Flugzeugbau bekannten Seitenruder.

Bei diesen Luftkissenfahrzeugen entsteht bei einer Verschiebung des Massenschwerpunktes, beispielsweise durch Passagiere oder Beladung, eine Neigung der Karosserie um die Längsstabilitätsachse, die Querstabilitätsachse oder um beide Achsen gleichzeitig.

Diese Durch die Verschiebung des Massenschwerpunktes bedingte Neigung um eine der Stabilitätsachsen kann im ungünstigsten Fall dazu führen, daß die Gummischürze des Luftkissenfahrzeuges während der Fahrt in das Wasser eintaucht. Die Gummischürze würde in diesem Fall mehr oder weniger stark eingedrückt und der Auftrieb durch das Luftkissen in diesem Bereich verringert. Im Ergebnis taucht das Luftkissenfahrzeug noch tiefer ein und könnte sich sogar überschlagen.

Ein anderer Effekt, der bei einer Verschiebung des Massenschwerpunktes auftritt, ist durchaus mit der Wirkung von Seitenwind zu vergleichen. Dieser Effekt entsteht durch den unterschiedlichen Abstand der Gummischürze zum Boden oder der Wasseroberfläche und dem dadurch bedingten unterschiedlichen Abstand der Gummischürze zum Boden oder der Wasseroberfläche und dem dadurch bedingten unterschiedlichen Abblasen der Luft aus dem Luftkissen. Die dabei entstehende Kraftkomponente schiebt das Luftkissenfahrzeug in Richtung der Verlagerung des Massenschwerpunktes.

Maßnahmen zum Ausgleich der Verlagerung des Massenschwerpunktes bei Luftkissenfahrzeugen sind beispielsweise durch den Einsatz zusätzlicher Trimmgewichte grundsätzlich möglich. Allerdings würden diese Maßnahmen zu einer zusätzlichen Gewichtsbelastung und damit zu einem erhöhten Energieverbrauch führen.

Aus der US-A-4 249 628 ist eine Steuerung für ein Luftkissenfahrzeug mit zwei im Heckbereich nebeneinander angeordneten Gebläsen für den Vortrieb beschrieben. Hinter jedem der Gebläse sind im Luftstrom innerhalb eines Luftkanales querruderähnliche Klappen um eine horizontale Achse schwenkbar angeordnet, die zwischen einer normalen Position, in der deren Ebene parallel zur Achse des Luftkanales verläuft und einer voll wirksamen Stellung, in der die Klappen quer stehen, also den Luftstrom nahezu vollständig verschließen, bewegt werden können. Zur Trimmung des Luftkissenfahrzeuges um dessen Querachse können die querruderähnlichen Klappen synchron nach oben oder unten bewegt werden. Diese Trimmung ist allerdings schwierig zu realisieren und nur bei Geradeausfahrt ausreichend wirksam.

Der Erfindung liegt deshalb die Aufgabe zugrunde, ein besser austrimmbares Luftkissenfahrzeug zu schaffen.

Die Erfindung bezieht sich auf ein Luftkissenfahrzeug mit zwei seitlich im Heckbereich vorgesehenen Triebwerken zur Erzeugung des Vortriebes, einem Kompressor zur Erzeugung eines unterhalb des Luftkissenfahrzeuges erzeugbaren Luftkissens, einer im Luftstrom der Triebwerke angeordneten Leitwerksanordnung mit zugehörender Trimmung, wobei eine zusätzliche Kraftkomponente durch eine Zusatzablenkung der Luftstrahlen beider Triebwerke erzeugt wird.

Die der Erfindung zugrundeliegende Aufgabe wird dadurch gelöst, daß die Leitwerksanordnung aus einem negativ angeordneten V-Leitwerk besteht, deren abwärts gerichtete und jeweils zur Richtungssteuerung mit einem Ruderelement versehenen Leitwerksflächen mittig durch die Ausströmöffnung der Triebwerke verlaufen und daß die obengenannte zusätzliche Kraftkomponente durch eine der Richtungssteuerung stetig überlagerte Zusatzablenkung der Luftstrahlen beider Triebwerke erzeugt wird.

Durch die Erfindung wird erreicht, daß das Luftkissenfahrzeug mit einfachen Mitteln und besonders feinfühlig auch bei einer Verlagerung des Massenschwerpunktes in einer weitgehend horizontalen Lage gehalten werden kann. Die Vorstehend beschriebenen Nachteile können dann nicht mehr auftreten. Insbesondere wird durch die Erfindung eine deutliche Verbesserung der Fahrsicherheit erreicht. Ein durch die Neigung um eine der Stabilitätsachsen sonst auftretende Abdrift, die mit der Wirkung von Seitenwind vergleichbar ist, wird vermieden.

Im Falle der Kopf- oder Hecklastigkeit des Luftkissenfahrzeuges wird die Zusatzablenkung der Luftstrahlen derart vorgenommen, daß die Trimmung um die Längsstabilitätsachse erfolgt. Andernfalls wird die Zusatzablenkung so geregelt, daß die Trimmung um die Längsstabilitätsachse erfolgt.

In einer weiteren Ausgestaltung der Erfindung wird die Zusatzablenkung der Luftstrahlen so vorgenommen, daß die Trimmung gleichzeitig um die Quer- und die Längsstabilitätsachse erfolgt.

In einer Variante der Erfindung wird die Ablenkung eines Luftstrahles oder der Luftstrahlen beider Triebwerke im Stand oder bei Langsamfahrt des Luftkissenfahrzeuges so lange vorgenommen, bis dieses eine horizontale Lage erreicht hat. Damit ist ein ständiger Ausgleich der Verlagerung des Massenschwerpunktes, beispielsweise beim Besteigen des Luftkissenfahrzeuges ohne weiteres möglich.

Für die Trimmung um die Querstabilitätsachse wird eine gleichsinnige Anstellung der Ruderelemente des V-Leitwerkes, oder im Falle der Trimmung um die Längsstabilitätsachse eine gegensinnige Anstellung der Ruderelemente des V-Leitwerkes vorgenommen. Dieser Einstellwert wird als konstanter Wert allen übrigen Ruderausschlägen überlagert.

Es ist auch ohne weiteres möglich, die Trimmung durch gleichzeitiges gleich- und gegensinniges Anstellen der Ruderelemente des V-Leitwerkes vorzunehmen.

Die Erfindung soll nachstehend an einem Ausführungsbeispiel ausführlich erläutert werden. In den zugehörigen Zeichnungen zeigen:
- Fig. 1: eine perspektivische Rückansicht eines Luftkissenfahrzeuges mit einem negativen V-Leitwerk;
- Fig. 2: eine Seitenansicht des Luftkissenfahrzeuges in Normallage;
- Fig. 3: eine Seitenansicht des Luftkissenfahrzeuges mit hecklastiger Trimmung;
- Fig. 4: eine Rückansicht des Luftkissenfahrzeuges in Normallage ohne Trimmung;
- Fig. 5: eine Rückansicht des Luftkissenfahrzeuges mit kopflastiger Trimmung;
- Fig. 6: eine Rückansicht des Luftkissenfahrzeuges mit hecklastiger Trimmung;
- Fig. 7: die Stellung der Ruderelemente ohne Trimmung und deren Schwenkbereich;
- Fig. 8: die Stellung der Ruderelemente bei einer hecklastigen Trimmung des Luftkissenfahrzeuges;
- Fig. 9: die Stellung der Ruderelemente bei einer kopflastigen Trimmung des Luftkissenfahrzeuges;
- Fig. 10: die Stellung der Ruderelemente bei einer Trimmung des Luftkissenfahrzeuges nach rechts; und
- Fig. 11: die Stellung der Ruderelemente bei einer Trimmung des Luftkissenfahrzeuges nach links.

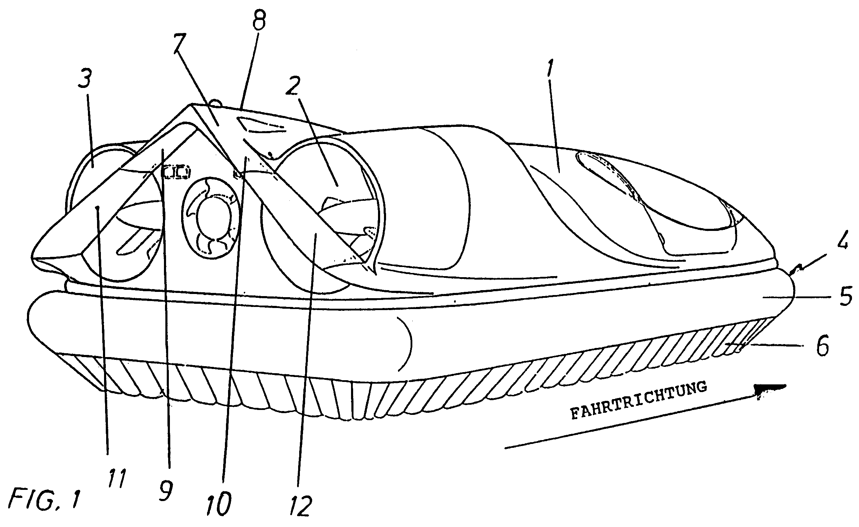

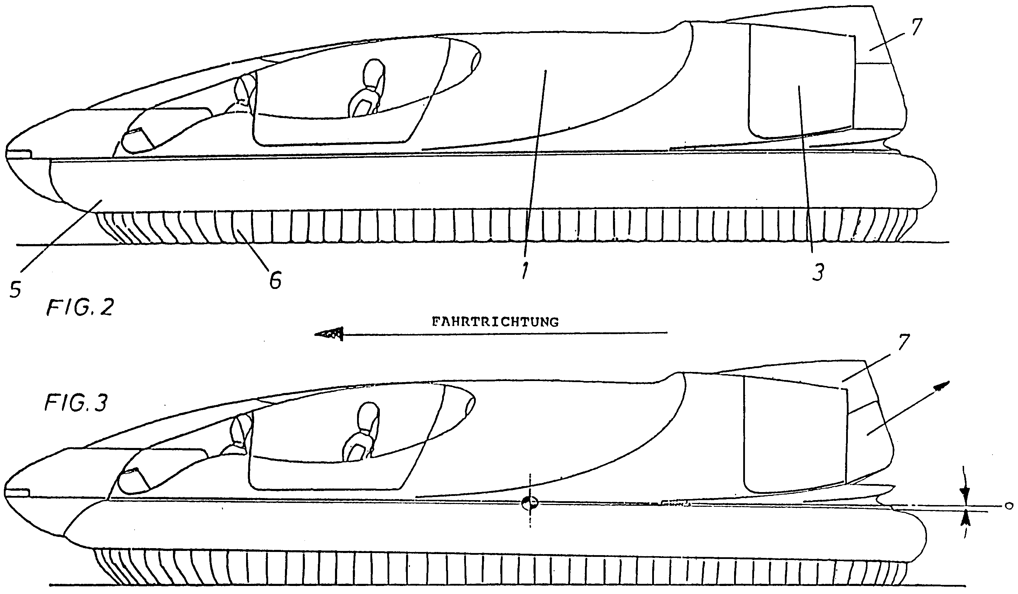

In den Fig. 1 und 2 ist ein Luftkissenfahrzeug dargestellt, bei dem im Heckbereich der Karosserie 1 zwei seitlich angeordnete Triebwerke 2, 3 zur Erzeugung des Vortriebes montiert sind. Unterhalb der Karosserie 1 befindet sich eine an dieser befestigte umlaufende Gummischürze 4, die aus einem Back Skirt 5 und einem nachgiebigen Finger Skirt 6 besteht. Hinter den Triebwerken 2, 3 ist weiterhin ein negatives V-Leitwerk 7 angeordnet, dessen mittlerer oberer Bereich als Stabilisierungsnase 8 ausgebildet ist, die über der Kontur der Karosserie 1 hervorsteht und zur Verbesserung der Richtungstabilität des Luftkissenfahrzeuges bei Geradeausfahrt, insbesondere bei höheren Geschwindigkeiten, dient.

Das V-Leitwerk 7 ist dabei derart ausgebildet, daß sich die beiden abwärts gerichteten Leitwerksflächen 9, 10 mittig über die Triebwerke 2, 3 erstrecken. Desweiteren sind die Leitwerksflächen 9, 10 mit Ruderelementen 11, 12 versehen, die über den gesamten Durchmesser der Triebwerke reichen. Die Ruderelemente 11, 12, die ein symmetrisches Profil aufweisen, können um eine nicht dargestellte Schwenkachse, die durch den Bereich der größten Dicke der Ruderelemente 11, 12 verläuft, nach oben oder unten geschwenkt werden.

Zur Einleitung einer Kurve werden die Ruderelemente 11, 12 gegensinnig angestellt. Werden beispielsweise das linke Ruderelement 11 nach oben und das rechte Ruderelement 12 um den gleichen Betrag nach unten geschwenkt, so wird eine Linkskurve gefahren.

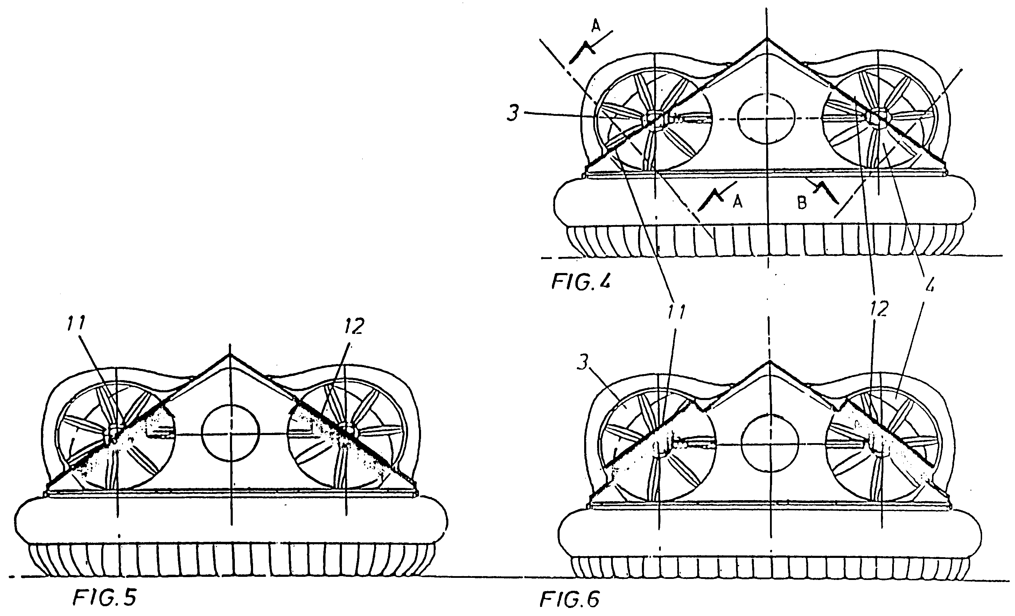

Bei Geradeausfahrt, ohne zusätzliche Trimmung, befinden sich die Ruderelemente 11, 12 in ihrer neutralen Stellung, in der sie gemeinsam mit den Leitwerksflächen 9, 10 jeweils eine Fläche bilden. In dieser Stellung erfolgt keinerlei Ablenkung der aus den Triebwerken geblasenen Luft. (Fig. 2, 4)

In den Fig. 3 und 6 ist ein Beispiel für eine hecklastige Trimmung des Luftkissenfahrzeuges bei Geradeausfahrt dargestellt. In diesem Fall werden beide Ruderelemente 11, 12 jeweils um den gleichen Betrag nach oben angestellt. Dabei erfolgt eine Ablenkung der Luftstrahlen beider Triebwerke 2, 3 entsprechend der Stellung der Ruderelemente 11, 12 nach oben und eine Absenkung des Heckbereiches des Luftkissenfahrzeuges ist die Folge. Gleichermaßen könnte auf diese Weise eine Verlagerung des Schwerpunktes in Richtung zum Fahrzeugbug ausgeglichen werden, indem durch die oben genannte Stellung der Ruderelemente 11, 12 eine Kraftkomponente erzeugt wird, die der Verlagerung des Schwerpunktes entgegengerichtet ist. Die Ruderelemente 11, 12 sind in diesem Fall so lange nach oben zu verstellen, bis das Luftkissenfahrzeug gegenüber dem Boden oder der Wasseroberfläche eine horizontale Lage einnimmt. Bei einer kopflastigen Trimmung des Luftkissenfahrzeuges (Fig. 5) werden beide Ruderelemente 11, 12 nach unten geschwenkt, so daß eine Kraftkomponente entsteht, die den Heckbereich nach oben hebt. Auch in diesem Fall sind beide Ruderelemente 11, 12 kontinuierlich nach unten zu bewegen, bis eine horizontale Lage des Luftkissenfahrzeuges erreicht ist.

In beiden Fällen wird die so eingestellte Stellung der Ruderelemente 11, 12 auch bei einer Kurvenfahrt beibehalten und zu den zur Einleitung der Kurvenfahrt erforderlichen Ruderausschlägen hinzuaddiert.

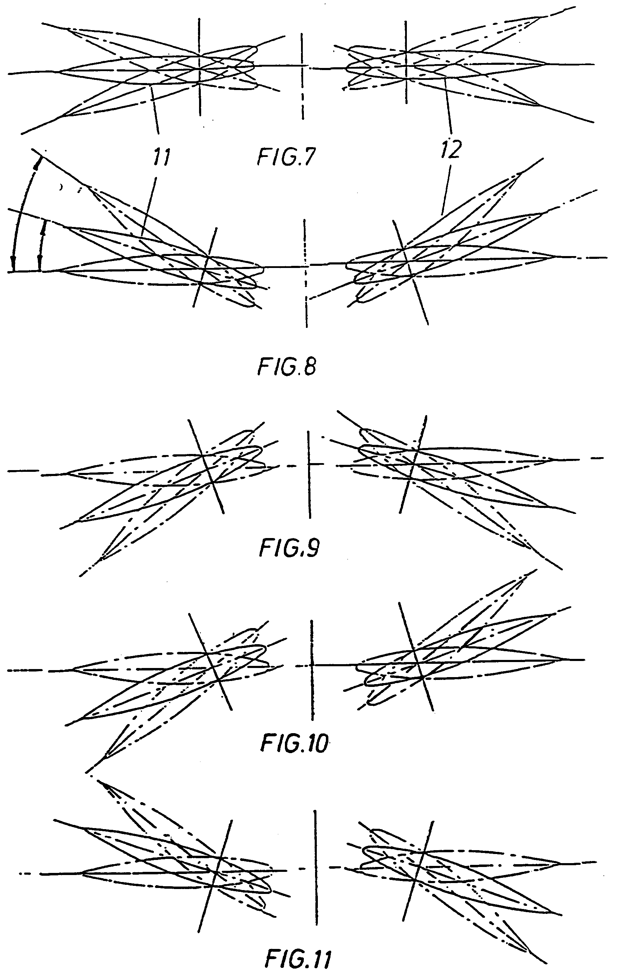

Die Fig. 7 bis 11 zeigen schematische Schnittdarstellungen des Schwenkbereiches der Ruderelemente 11, 12 zur Durchführung von Fahrmanövern. Das Ruderelement 11 ist dabei entlang der Linie A-A und das Ruderelement 12 entlang der Linie B-B in Fig. 4 geschnitten.

In Fig. 7 sind beide Ruderelemente 11, 12 in ihrer Nullage und ihrem möglichen Schwenkbereich zum Befahren von Kurven dargestellt. Eine Trimmung des Luftkissenfahrzeuges um eine der Stabilitätsachsen erfolgt dabei nicht. Soll beispielsweise eine hecklastige Trimmung realisiert werden, so sind beide Ruderelemente 11, 12 aus ihrer Nullage heraus nach oben zu verschwenken (Fig. 8). Die dann erreichte Stellung der Ruderelemente 11, 12 stellt dann die neue Nullage dar, um die die Ruder innerhalb ihres Schwenkbereiches zum Befahren von Kurven zu schwenken sind. Das bedeutet, daß die für das Trimmen des Luftkissenfahrzeuges erforderlichen Ruderausschläge als konstanter Betrag den Ruderausschlägen für Kurvenfahrt hinzuaddiert werden. Ist eine kopflastige Trimmung erforderlich (Fig. 9), so sind die Ruderlemente 11, 12 auf analoge Weise, wie vorstehend beschrieben, nach unten zu schwenken.

Soll beispielsweise eine rechtslastige Trimmung realisiert werden (Fig. 10), so ist das linke Ruderelement 11 abwärts und das rechte Ruderelement 12 um jeweils den gleichen Betrag nach oben zu schwenken. Die weiteren für eine Kurvenfahrt erforderlichen Ruderausschläge werden dann der neuen Grundstellung hinzuaddiert. Bei einer linkslastigen Trimmung (Fig. 11) ist auf analoge Weise zu verfahren.

Selbstverständlich ist es möglich, die vorstehend beschriebenen Varianten für die Trimmung des Luftkissenfahrzeuges miteinander zu kombinieren, so daß eine Trimmung um alle Stabilitätsachsen gleichzeitig möglich ist.

### Bezugszeichenliste

- 1: Karosserie
- 2: Triebwerk
- 3: Triebwerk
- 4: Gummischürze
- 5: Back Skirt
- 6: Finger Skirt
- 7: V-Leitwerk
- 8: Stabilisierungsnase
- 9: Leitwerksfläche
- 10: Leitwerksfläche
- 11: Ruderelement
- 12: Ruderlement

## Patentansprüche

1. Luftkissenfahrzeug mit zwei seitlich im Heckbereich vorgesehenen Triebwerken (2, 3) zur Erzeugung des Vortriebes, einem Kompressor zur Erzeugung eines unterhalb des Luftkissenfahrzeuges erzeugbaren Luftkissens, einer im Luftstrom der Triebwerke (2, 3) angeordneten Leitwerksanordnung mit zugehörender Trimmung, wobei eine zusätzliche Kraftkomponente durch eine Zusatzablenkung der Luftstrahlen beider Triebwerke (2, 3) erzeugt wird, **dadurch gekennzeichnet,** daß die Leitwerksanordnung aus einem negativ angeordneten V-Leitwerk (7) besteht, deren abwärts gerichtete und jeweils zur Richtungssteuerung mit einem Ruderelement (11, 12) versehenen Leitwerksflächen (9, 10) mittig durch die Ausströmöffnung der Triebwerke (2, 3) verlaufen und daß die obengenannte zusätzliche Kraftkomponente durch eine der Richtungssteuerung stetig überlagerte Zusatzablenkung der Luftstrahlen beider Triebwerke erzeugt wird.

2. Luftkissenfahrzeug nach Anspruch 1, **dadurch gekennzeichnet,** daß die Zusatzablenkung derart erfolgt, daß die Trimmung um die Längsachse erfolgt.

3. Luftkissenfahrzeug nach Anspruch 1, **dadurch gekennzeichnet,** daß die Zusatzablenkung derart erfolgt, daß die Trimmung um die Querstabilitätsachse erfolgt.

4. Luftkissenfahrzeug nach Anspruch 1, **dadurch gekennzeichnet,** daß die Zusatzablenkung derart erfolgt, daß die Trimmung gleichzeitig um die Quer- und die Längsstabilitätsachse erfolgt.

5. Luftkissenfahrzeug nach den Ansprüchen 1 bis 4, **dadurch gekennzeichnet,** daß die Ablenkung eines Luftstrahles oder der Luftstrahlen beider Triebwerke (2; 3) im Stand oder bei Langsamfahrt des Luftkissenfahrzeuges so lange vorgenommen wird, bis dieses eine horizontale Lage erreicht hat.

6. Luftkissenfahrzeug nach den Ansprüchen 1 bis 5, **dadurch gekennzeichnet,** daß die Ablenkung der Luftstrahlen eines oder beider Triebwerke (2; 3) durch Verstellung eines oder beider Ruderelemente (11, 12) des V-Leitwerkes (7) vorgenommen wird und daß diese Ablenkung der Richtungssteuerung jeweils überlagert wird.

7. Luftkissenfahrzeug nach Anspruch 6, **dadurch gekennzeichnet,** daß die Trimmung um die Querstabilitätsachse durch gleichsinnige Anstellung der Ruderelemente (11, 12) des V-Leitwerkes (7) erfolgt.

8. Luftkissenfahrzeug nach Anspruch 6, **dadurch gekennzeichnet,** daß die Trimmung um die Längsstabilitätsachse durch gegensinnige Anstellung der Ruderelemente (11, 12) des V-Leitwerkes (7) erfolgt.

9. Luftkissenfahrzeug nach Anspruch 6, **dadurch gekennzeichnet,** daß die Trimmung durch gleichzeitiges Anstellen der Ruderelemente (11, 12) des V-Leitwerkes (7) erfolgt.

## Claims

1. A hovercraft with two engines (2,3) arranged laterally at the stern to generate forward motion, a compressor to generate an air-cushion beneath the craft and a stabiliser arrangement with an associated trimmer located in the air jet of the engines (2,3) whereby an additional force component is generated by an additional deflection of the air jets of both engines (2,3) characterised in that the stabiliser arrangement comprises a negatively arranged V-plane (7), whose downwardly directed stabiliser surfaces (9,10), which are each fitted with a rudder element (11,12), run centrally through the flow outlet apertures of the engines (2,3) and that the above mentioned additional force component is generated by additional deflection of the air jets of both engines (2,3), which is constantly superimposed on the directional control.

2. Hovercraft trimmer as per Claim 1, characterised in that the additional deflection is executed in such a way that the craft is trimmed about the longitudinal axis of stability.

3. Hovercraft trimmer as per Claim 1, characterised in that the additional deflection is executed in such a way that the craft is trimmed about the transverse axis of stability.

4. Hovercraft trimmer as per Claim 1, characterised in that the additional deflection is executed in such a way that the craft is trimmed simultaneously about the transverse and longitudinal axes of stability.

5. Hovercraft trimmer as per Claims 1 to 4, characterised in that one air jet or the air jets of both engines (2;3) are deflected while the hovercraft is stationary or moving slowly until the craft reaches a horizontal position.

6. Hovercraft trimmer as per Claims 1 to 5, characterised in that the air jets of one or both engines (2;3) are deflected by adjusting one or both of the rudder elements (11,12) of the V-plane (7) and superimposing this deflection on the directional control.

7. Hovercraft trimmer as per Claim 6, characterised in that the hovercraft is trimmed about the transverse axis of stability by setting the rudder elements (11,12) of the V-plane (7) in the same direction.

8. Hovercraft trimmer as per Claim 6, characterised in that the hovercraft is trimmed about the longitudinal axis of stability by setting the rudder elements (11,12) of the V-plane (7) in opposite directions.

9. Hovercraft trimmer as per Claim 6, characterised in that the hovercraft is trimmed by simultaneously setting the rudder elements (11,12) of the V-plane (7).

## Revendications

1. Véhicule à coussin d'air comportant deux propulseurs (2,3) prévus latéralement à l'arrière pour la production de la poussée, un compresseur pour la création d'un coussin d'air pouvant être créé au-dessous du véhicule, un système d'empennage avec moyen d'établissement de l'assiette, disposé dans le courant d'air des propulseurs (2,3), une composante de force additionnelle étant créée par une déviation supplémentaire des jets d'air des deux propulseurs (2,3), caractérisé en ce que le système d'empennage est constitué par un empennage en V (7) à disposition négative dont les surfaces d'empennage (9,10), dirigées vers le bas et munies chacune d'un élément de gouvernail (11,12) pour la commande de direction, s'étendent en travers de l'ouverture d'échappement des propulseurs (2,3) en passant par le centre de celle-ci, et en ce que la composante de force additionnelle susmentionnée est créée par une déviation supplémentaire des jets d'air des deux propulseurs, superposée en permanence à la commande de direction.

2. Véhicule à coussin d'air selon la revendication 1, caractérisé en ce que la déviation supplémentaire s'effectue de telle sorte que l'assiette est établie autour de l'axe longitudinal.

3. Véhicule à coussin d'air selon la revendication 1, caractérisé en ce que la déviation supplémentaire s'effectue de telle sorte que l'assiette est établie autour de l'axe de stabilité transversale.

4. Véhicule à coussin d'air selon la revendication 1, caractérisé en ce que la déviation supplémentaire s'effectue de telle sorte que l'assiette est établie simultanément autour des axes de stabilité transversale et longitudinale.

5. Véhicule à coussin d'air selon l'une quelconque des revendications 1 à 4, caractérisé en ce que la déviation d'un jet d'air ou des jets d'air des deux propulseurs (2,3) à l'arrêt ou en marche lente du véhicule à coussin d'air est effectuée jusqu'à ce que celui-ci ait atteint une position horizontale.

6. Véhicule à coussin d'air selon l'une quelconque des revendications 1 à 5, caractérisé en ce que la déviation des jets d'air d'un ou des deux propulseurs (2,3) est effectuée par réglage d'un ou des deux éléments de gouvernail (11,12) de l'empennage en V (7), et en ce que cette déviation est superposée chaque fois à la commande de direction.

7. Véhicule à coussin d'air selon la revendication 6, caractérisé en ce que l'assiette est établie autour de l'axe de stabilité transversale par réglage, dans le même sens, des éléments de gouvernail (11,12) de l'empennage en V (7).

8. Véhicule à coussin d'air selon la revendication 6, caractérisé en ce que l'assiette est établie autour de l'axe de stabilité longitudinale par réglage, en sens inverses, des éléments de gouvernail (11,12) de l'empennage en V (7).

9. Véhicule à coussin d'air selon la revendication 6, caractérisé en ce que l'assiette est établie par réglage simultané des éléments de gouvernail (11,12) de l'empennage en V (7).
